(19) Europäisches Patentamt
European Patent Office
Office européen des brevets

(11) EP 0 908 464 A1

(12) **EUROPÄISCHE PATENTANMELDUNG**

(43) Veröffentlichungstag:
**14.04.1999 Patentblatt 1999/15**

(51) Int. Cl.[6]: **C07F 9/40**, C08G 18/38

(21) Anmeldenummer: **98119030.9**

(22) Anmeldetag: **08.10.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **08.10.1997 DE 19744426**

(71) Anmelder:
**BASF AKTIENGESELLSCHAFT**
**67056 Ludwigshafen (DE)**

(72) Erfinder:
- **Fritz, Ralf**
  **67158 Ellerstadt (DE)**
- **Pretzsch, Regina**
  **01987 Schwarzheide (DE)**
- **Guettes, Bernd**
  **03238 Sallgast (DE)**
- **Reichelt, Michael**
  **01945 Ruhland (DE)**

(74) Vertreter:
**Isenbruck, Günter (DE) et al**
**Patent- und Rechtsanwälte**
**Bardehle et al.**
**Theodor-Heuss-Anlage 12**
**D-68165 Mannheim (DE)**

(54) **erfahren zur Herstellung von Hydroxyphosphonaten und deren Verwendung als Flammschutz in Kunststoffen**

(57) Die Erfindung betrifft ein Verfahren zur Herstellung von Dialkylhydroxyalkanphosphonaten, bei dem ein Phosphonat mit einem Aldehyd in Gegenwart eines basischen Katalysators umgesetzt wird. Weiterhin betrifft die Erfindung unter Verwendung von Dialkylhydroxyalkanphosphonaten hergestellte Polyurethane, insbesondere Polyurethanschaumstoffe.

EP 0 908 464 A1

## Beschreibung

Die vorliegende Erfindung betrifft ein Verfahren zur Herstellung von Dialkylhydroxyalkanphosphonaten, bei dem ein Phosphonat mit einem Aldehyd in Gegenwart eines basischen Katalysators umgesetzt wird. Weiterhin betrifft die Erfindung die Verwendung von Dialkylhydroxyalkanphosphonaten bei der Herstellung von Polyurethanen, insbesondere bei der Herstellung von Polyurethanschaumstoffen. Weiterhin betrifft die Erfindung Polyurethanschaumstoffe mit einem Gehalt an Dialkylhydroxyalkanphosphonaten.

Polyurethane sind Materialien, die sich für eine Vielzahl unterschiedlicher Anwendungen im industriellen sowie im privaten Bereich eignen. Problematisch ist deren Einsatz jedoch immer dann, wenn zur vorbeugenden Gefahrenabwehr das Brandverhalten der verwendeten Polyurethane eine Rolle spielt, beispielsweise bei deren Verwendung in feuergefährdeten Bereichen oder in Privathaushalten. Um das Brandverhalten von Polyurethanen zu modifizieren, werden diesen Werkstoffen üblicherweise Flammschutzmittel zugegeben, mit deren Hilfe sich das Brandverhalten beeinflussen läßt.

Bei den Polyurethanschaumstoffen besteht diese Problematik in besonderem Maße, nachdem die Verwendung von Fluor-Chlor-Kohlenwasserstoffen (FCKW) als Treibmittel bei der Herstellung von Polyurethanschaumstoffen in vielen Ländern aus ökologischen Gründen nicht mehr erlaubt ist. Deshalb werden zunehmend auf der Suche nach Ersatzstoffen auch brennbare Treibmittel bei der Polyurethanschaumherstellung eingesetzt. Die Verwendung brennbarer Treibmittel führt jedoch zu erhöhter Brennbarkeit der Polyurethanschaumstoffe und stellt daher hohe Anforderungen an die flammwidrige Ausrüstung (Flammschutz), weshalb die Flammschutzsysteme den veränderten Bedingungen angepaßt werden müssen.

Für FCKW geschäumte Polyurethanschaumstoffe ist die Verwendung von Tris(chlorisopropyl)phosphat (TCPP) als Flammschutzmittel aus der DE-A 16 94 430 bekannt, während die DE-A 19 56 406 über die Verwendung von Ammoniumpolyphosphat (APP) und vor allem über die Verwendung von Kombinationen von APP und Tris(halogenalkyl)phosphat als Flammschutzmittel berichtet.

Die EP-A 0 645 418 beschreibt ein pumpfähiges, sedimentationsstabiles Flammschutzmittelgemisch aus APP und TCPP, welches in einer n-Pentan getriebenen Schaumrezeptur zu einem FCKW-freien, flammwidrigen Polyurethanschaum führt. Dieser Polyurethanschaum erfüllt die Brandklasse B2. Hierbei wirken APP und TCPP als synergistisches System, da weder der Einsatz von APP noch TCPP allein zu Schäumen entsprechend der o.g. Brandklasse führt.

Der Einsatz von TCPP oder anderen halogenhaltigen Verbindungen birgt im Brandfall jedoch die Gefahr der Entstehung von hochtoxischen polyhalogenierten Dibenzodioxinen bzw. Dibenzofuranen. Daneben entstehen naturgemäß korrosive Gase wie HCl oder HBr, die unter Umständen gefährliche verdeckte Brandschäden verursachen können und zudem Ursache für eine erhebliche Personengefährdung sein können.

Aus diesen Gründen werden Polyurethanschaumstoffe zunehmend mit halogenfreiem Flammschutz ausgerüstet.

Neben den genannten Halogenverbindungen sind Phosphorverbindungen hochwirksame Flammschutzmittel für Polyurethanschäume. Wegen ihres hohen Phosphorgehaltes und der guten Hydrolysebeständigkeit sind beispielsweise die mit kurzen Alkylketten substituierten Phosphonate bevorzugt. Obwohl Dimethylmethanphosphonat den höchsten Phosphorgehalt aufweist, ist dessen Verwendung wegen der toxischen Wirkung dieser Verbindung problematisch und daher stark eingeschränkt. Höhere Homologe dieser Verbindungsklasse, beispielsweise das Diethylethanphosphonat, müssen jedoch wegen des geringeren Phosphorgehalts in größeren Mengen eingesetzt werden, wobei der weichmachende Effekt dieser in Bezug auf Isocyanatgruppen nicht reaktiven Verbindungen negativ in Erscheinung tritt.

Es ist bekannt, durch Verwendung reaktiver Phosphorverbindungen diese Nachteile zu vermeiden. So beschreibt die US-A 5,173,515 ein reaktives, phosphorhaltiges Diol und schlägt dessen Verwendung als Flammschutzmittel vor. Der beschriebene N,N-Bis-(2-hydroxyethyl)aminomethanphosphonsäurediethylester weist jedoch eine unerwünscht hohe Reaktivität auf, die stark einschränkend auf die mögliche Einsatzmenge in Polyurethanschaumformulierungen wirkt. Weiterhin verfügt diese Verbindung nur über einen relativ geringen Phosphorgehalt, was die für einen ausreichenden Flammschutz benötigte Einsatzmenge im Vergleich zu Verbindungen mit einem höheren Phosphorgehalt erhöht. Aus diesen Gründen wird von der Verwendung der beschriebenen Verbindung als Flammschutzmittel in der Regel abgesehen.

Die US-A 4,808,744 betrifft Umesterungsprodukte von Diethylhydroxymethanphosphonat mit Diethylphosphit, und deren Verwendung als Flammschutzmittel. Die Verwendung von Diethylhydroxymethanphosphonat selbst als Flammschutzmittel wird in der Druckschrift nicht vorgeschlagen.

Allgemein anerkannte Theorien gehen davon aus, daß für die Herstellung von Polyurethanschaumstoffen auf Isocyanatbasis vorwiegend stark verzweigend wirkende, mehrwertige Alkohole (Polyole) mit Funktionalitäten von zwei und höher verwendet werden müssen (Becker/Braun, Kunststoffhandbuch, Band 7, Polyurethane, Carl Hanser Verlag München Wien, 1993, S. 268). Monofunktionelle Alkohole (Monoole) hingegen führen zum Kettenabbruch bei der Reaktion mit den Isocyanaten bzw. verringern die Netzwerkdichte des entstehenden Polymeren. Daraus ergeben sich

schlechte Schaumstoffeigenschaften und mangelhaftes Verarbeitungsverhalten. Deshalb wurden monofunktionelle Phosphonate als Flammschutzmittel in Formulierungen für Hartschaumstoffe auf Isocyanatbasis bisher nicht verwendet.

Es bestand daher ein Bedarf nach hochwirksamen Flammschutzmitteln, die aus leicht zugänglichen Ausgangsmaterialien in hoher Ausbeute darstellbar sind. Weiterhin bestand ein Bedarf nach Polyurethanschaumstoffen, die unter Verwendung hochwirksamer Flammschutzmittel, die aus leicht zugänglichen Ausgangsmaterialien in hoher Ausbeute darstellbar sind, hergestellt werden können, ohne Einbußen bezüglich der mechanischen Schaumstoffeigenschaften und bezüglich des Verarbeitungsverhaltens.

Der Erfindung liegt damit die Aufgabe zugrunde, ein Verfahren zur Herstellung von hochwirksamen Flammschutzmitteln zur Verfügung zu stellen, das unter weitgehender Vermeidung von Nebenreaktionen zu hohen Ausbeuten führt. Weiterhin war es Aufgabe der Erfindung flammgeschützte Polyurethanschaumstoffe auf Isocyanatbasis zur Verfügung zu stellen, bei denen die Nachteile des Standes der Technik weitgehend vermieden und die mechanischen, physikalischen und verarbeitungstechnischen Eigenschaften nicht negativ beeinflußt werden, ohne daß das Brandverhalten verschlechtert wird.

Gelöst werden die genannten Aufgaben durch das erfindungsgemäße Verfahren zur Herstellung von Dialkylhydroxyalkanphosphonaten der allgemeinen Formel I sowie durch Polyurethane, enthaltend solche Dialkylhydroxyalkanphosphonate und Verfahren zu deren Herstellung.

Gegenstand der Erfindung ist ein Verfahren zur Herstellung von Dialkylhydroxyalkanphosphonaten der allgemeinen Formel I

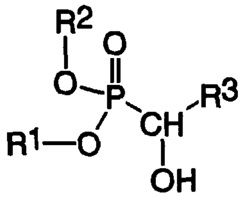

(I)

worin $R^1$ und $R^2$ jeweils unabhängig voneinander für einen linearen oder verzweigten, gegebenenfalls mit Halogen oder Hydroxygruppen substituierten $C_{1-10}$-Alkylrest oder $C_{6-13}$-Aryl- oder $C_{7-14}$-Benzylrest stehen, und $R^3$ für Wasserstoff oder einen linearen oder verzweigten $C_{1-10}$-Alkylrest oder für einen $C_{6-13}$-Aryl-, $C_{7-14}$-Benzyl- oder Furfurylrest steht, bei dem ein Reaktionsgemisch, enthaltend

a) ein Phosphonat der allgemeinen Formel II

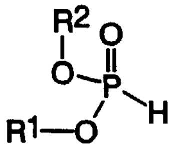

(II)

worin $R^1$ und $R^2$ jeweils unabhängig voneinander für einen linearen oder verzweigten, gegebenenfalls mit Halogen oder Hydroxygruppen substituierten $C_{1-10}$-Alkylrest oder $C_{6-13}$-Aryl- oder $C_{7-14}$-Benzylrest steht, als Komponente A,
und
b) einen Aldehyd der allgemeinen Formel III

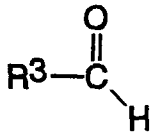

(III)

worin $R^3$ für Wasserstoff oder einen linearen oder verzweigten $C_{1-10}$-Alkylrest oder für einen $C_{6-13}$-Aryl-, $C_{7-14}$-

Benzyl- oder Furfurylrest steht, als Komponente B,
zusammen mit
c) einem basischen Katalysator, als Komponente C

umgesetzt wird, wobei ein Gemisch der Komponenten A und B und C auf eine Temperatur von etwa 20 bis etwa 60°C gebracht wird, oder ein Gemisch der Komponenten A und B oder ein Gemisch der Komponenten A und C auf eine Temperatur von etwa 20 bis etwa 60°C gebracht wird, wobei jeweils die fehlende Komponente B oder C nach Erreichen der Temperatur von etwa 20 bis etwa 60°C zugegeben wird, und anschließend die Temperatur des Reaktionsgemischs für einen Zeitraum von etwa 1 bis etwa 30 min auf einen Wert von etwa 61 bis etwa 300°C gebracht wird.

Unter "Phosphoraten" werden im Rahmen des vorliegenden Textes Diester der Phosphonsäure verstanden. Die Phosphonsäure stellt dabei eine tautomere Form der phosphorigen Säure dar, wobei die Diester der phosphorigen Säure und die Ester der Phosphonsäure identisch sind. Häufig werden Phosphonate auch als Phosphite bezeichnet, wobei im Rahmen der vorliegenden Erfindung entsprechend die sekundären Phosphite eingesetzt werden.

Beispiele für die im Rahmen der vorliegenden Erfindung einsetzbaren Phosphonate sind beispielsweise Dimethylphosphonat, Diethylphosphonat, Diisopropylphosphonat, Dibutylphosphonat, Dihexylphosphonat, Dioctylphosphonat, Bis(2-hydroxyethyl)phosphonat, Dihydroxypropylphosphonat, Dimethoxyethylphosphonat, Diallylphosphonat, Dibenzylphosphonat, Ethylmethylphosphonat, Methylbenzylphosphonat, oder Diphenylphosphonat oder Gemische aus zwei oder mehr davon.

Die oben genannten Phosphonate können in technischer Form, d.h. mit einem Phosphonatgehalt von mindestens etwa 90 Gew.-%, vorzugsweise mindestens etwa 95 oder etwa 98 Gew.-%, eingesetzt werden.

Vorzugsweise werden die Phosphonate jedoch in im wesentlichen reiner Form eingesetzt. Daher kann das im Rahmen des erfindungsgemäßen Verfahrens eingesetzte Phosphonat gegebenenfalls in einer Vorstufe zum erfindungsgemäßen Verfahren einer Reinigung unterzogen werden, wobei eine destillative Reinigung des Phosphonats bevorzugt ist. In einer besonders bevorzugten Ausführungsform wird die destillative Reinigung des Phosphonats unter vermindertem Druck durchgeführt, vorzugsweise bei einer Temperatur bis zu etwa 120°C und einem Druck von etwa 0,01 bis etwa 100 mbar vorzugsweise etwa 0,1 bis etwa 10 mbar.

Als Komponente B wird im Rahmen der vorliegenden Erfindung ein Aldehyd der allgemeinen Formel III eingesetzt. Beispiele für Aldehyde, die im Rahmen des erfindungsgemäßen Verfahrens eingesetzt werden können sind Formaldehyd, Paraformaldehyd, Acetaldehyd, Glyoxal, Propionaldehyd, Butyraldehyd, Isobutyraldehyd, Benzaldehyd, Cyclohexylcarboxaldehyd, Furfural, Isovaleraldehyd, Diethylacetaldehyd, 2-Ethylhexanal oder Succinaldehyd oder Gemische aus zwei oder mehr der genannten Aldehyde. Bevorzugt sind Formaldehyd, Paraformaldehyd, Acetaldehyd, Propionaldehyd, Butyraldehyd, Benzaldehyd oder Furfural oder ein Gemisch aus zwei oder mehr davon.

Der Begriff "Aldehyde" schließt im Rahmen der vorliegenden Erfindung auch Verbindungen mit ein, die erst im Reaktionsgemisch einen der allgemeinen Formel III entsprechenden Aldehyd erzeugen. Ein Beispiel für eine solche Verbindung ist Paraformaldehyd.

Als Komponente C wird im Rahmen der vorliegenden Erfindung im Reaktionsgemisch mindestens ein basischer Katalysator eingesetzt. Als basische Katalysatoren werden vorzugsweise Katalysatoren auf Basis organischer Verbindungen, insbesondere auf Basis organischer Sickstoffverbindungen im Rahmen des erfindungsgemäßen Verfahrens eingesetzt.

Besonders zum Einsatz als Komponente C im Rahmen des erfindungsgemäßen Verfahrens geeignet sind tertiäre Aminoverbindungen, insbesondere Trialkylamine oder Cycloalkyldialkylamine. Beispiele hierfür sind Triisobutylamin, Tripropylamin, N-Ethyldiisopropylamin oder N,N-Dicyclohexylethylamin. Bevorzugt wird im Rahmen der vorliegenden Erfindung Triethylamin oder N,N-Dimethylcyclohexylamin oder deren Gemische als Komponente C eingesetzt.

Es ist im Rahmen der vorliegenden Erfindung bevorzugt, wenn die Komponente C in einer Menge von etwa 0,1 bis etwa 5 Gew.-% im Reaktionsgemisch enthalten ist.

Die Durchführung des erfindungsgemäßen Verfahrens hängt von der gewählten Vorgehensweise bezüglich der Zugabe der Komponenten A, B und C ab.

Soll die Zugabe der Komponenten A, B und C gleich zu Beginn des erfindungsgemäßen Verfahrens erfolgen, so werden zunächst die Komponenten A, B und C, vorzugsweise im Reaktionsgefäß, gemischt.

Es ist im Rahmen der vorliegenden Erfindung jedoch bevorzugt, wenn zunächst die Komponenten A und B, oder A und C, vorgelegt und vermischt werden. Besonders bevorzugt ist es, wenn zunächst die Komponenten A und B vorgelegt und vermischt werden.

Vorzugsweise werden die Komponenten A und B dabei in etwa equimolarer Menge eingesetzt. Gegebenfalls kann jedoch auch ein leichter Überschuß an Komponente B vorliegen.

Das Vorlegen und Mischen der Komponenten A und B, oder A und C, erfolgt zweckmäßigerweise in einem Gefäß, das im Anschluß an das Mischen zur weiteren Durchführung der Umsetzung geeignet ist. Es ist jedoch auch möglich, die beiden Komponenten A und B, oder A und C, in einem räumlich von der Apparatur zur Durchführung des

Verfahrens getrennten Gefäß vorzulegen und zu mischen, und im Anschluß oder nach Lagerung in ein zur Durchführung des erfindungsgemäßen Verfahrens geeignetes Gefäß zu überführen.

Das Mischen der im Reaktionsgemisch vorliegenden Komponenten kann mit dem Fachmann bekannten, üblichen Mischvorrichtungen durchgeführt werden. Zweckmäßigerweise wird die Agitation des Reaktionsgemischs mindestens solange aufrechterhalten, bis eine Umsetzung zum Endprodukt begonnen hat.

Vorteilhafterweise wird die Agitation während des gesamten erfindungsgemäßen Verfahrens fortgeführt.

Insbesondere wenn eine der beiden Komponenten A oder B fest und die andere flüssig ist, sollte zur Vermeidung von Sedimentation und damit verbundenem inhomogenem Reaktionsablauf darauf geachtet werden, daß das die Komponenten A und B enthaltende Gemisch ständig gerührt wird.

Wenn das Gemisch der Komponenten A und B eine zu hohe Viskosität aufweist, oder wenn beide Komponenten A und B Feststoffe sind, kann dem Reaktionsgemisch ein geeignetes Lösemittel zugesetzt werden. Als Lösemittel werden insbesondere inerte, trockene Lösemittel eingesetzt, beispielsweise Cyclohexan, n-Heptan, Toluol oder N-Methylpyrrolidon.

Sofern bislang nur die Komponenten A und B im Reaktionsgemisch vorliegen, kann zum jetzigen Zeitpunkt schon Komponente C, d.h. der basische Katalysator, zugegeben werden.

Im Anschluß an den Mischungsvorgang wird das Gemisch enthaltend die Komponenten A, B und gegebenenfalls C, auf eine Temperatur von etwa 20°C - 60°C, vorzugsweise etwa 30°C - 45°C, erwärmt. Die Zeitspanne über die sich eine solche Erwärmung erstreckt sollte bei etwa 5 bis etwa 50 Minuten liegen.

Ist die gewünschte Temperatur erreicht, so wird in einer bevorzugten Ausführungsform der Erfindung die Komponente C zugegeben. Anschließend wird das so erhältliche Reaktionsgemisch, enthaltend Komponenten A, B und C, auf eine Temperatur von etwa 61°C bis etwa 300°C erwärmt.

Der Erwärmungsvorgang kann eine Zeitspanne von etwa 5 bis etwa 90 Minuten in Anspruch nehmen. Vorzugsweise wird die Erwärmung jedoch schnell durchgeführt, d.h., innerhalb einer Zeitspanne von etwa 5 bis etwa 30 Minuten.

Ist die gewünschte Temperatur erreicht, so wird das Reaktionsgemisch für eine Zeitspanne von etwa 1 bis etwa 30, vorzugsweise etwa 1,5 bis etwa 15 und besonders bevorzugt etwa 2 bis etwa 10 Minuten bei dieser Temperatur gehalten. Als gewünschte Temperatur zur Umsetzung kommen beispielsweise Temperaturen von etwa 80 bis etwa 180 °C, insbesondere etwa 90 bis etwa 140 °C in Frage.

Im Anschluß an die Umsetzung bei erhöhter Temperatur kann eine Nachbehandlung bei etwa 20 bis etwa 60 °C vorgenommen werden. Hierbei wird das Reaktionsgemisch für eine Zeitspanne von etwa 20 bis etwa 120 Minuten, vorzugsweise etwa 30 bis etwa 90 Minuten, bei der gewünschten Temperatur gerührt. Die gewünschte Temperatur kann beispielsweise bei 20, 30, 40, 50 oder 60°C liegen.

Anschließend wird das Reaktionsgemisch gegebenenfalls mittels einer geeigneten Reinigungsmethode behandelt, um das Reaktionsprodukt zu isolieren. Geeignete Reinigungsmethoden sind dem Fachmann bekannt. Wenn es sich bei dem Reaktionsprodukt um eine Verbindung im festen Aggregatzustand handelt, kann es beispielsweise vorteilhaft sein, zunächst durch Anlegen eines verminderten Drucks und/oder Erhöhung der Temperatur des Reaktionsgemischs eventuell noch im Reaktionsgemisch vorliegende, destillierbare Verunreinigungen zu entfernen. Wenn die Umsetzung in Gegenwart eines Lösemittels durchgeführt wurde so empfiehlt es sich ebenfalls, dieses Lösemittel durch Druckverminderung im Reaktionsgefäß zu entfernen. Feste Reaktionsprodukte können im Anschluß an die Behandlung des Reaktionsgemischs unter vermindertem Druck und bei erhöhter Temperatur in der Regel gängigen Reinigungsverfahren für Feststoffe zugeführt werden. Beispielsweise hat sich für die im Rahmen der durchführung des erfindungsgemäßen Verfahrens anfallenden, festen Reaktionsprodukte die Rekristallisation als geeignete Reinigungsmethode erwiesen. Geeignete Lösemittel und Verfahren zur Rekristallisation sind dem Fachmann aus einschlägigen Standardwerken bekannt.

Wenn die Reaktionsprodukte des erfindungsgemäßen Verfahrens einen flüssigen Aggregatzustand aufweisen, so bietet sich eine destillative Aufarbeitung des Produktes an. Hierbei kann unter Normaldruck lediglich durch Temperaturerhöhung eine Trennung des Reaktionsprodukts von eventuell vorliegenden Verunreinigungen erreicht werden, vorzugsweise wird jedoch zur destillativen Reinigung eine Kombination aus Erhöhung der Temperatur und Verminderung des Drucks in der Reaktionsapparatur bevorzugt.

Eine Reinigung ist jedoch nicht bei allen Umsetzungen notwendig. In der Regel führt das erfindungsgemäße Verfahren zu Produkten, deren Reinheit zur Weiterverwendung in vielen Anwendungsbereichen ausreicht.

Die vorliegende Erfindung betrifft weiterhin flammgeschützte, phosphonathaltige, beispielsweise ohne Verwendung von Fluorchlorkohlenwasserstoffen (FCKW) geschäumte Polyurethanschaumstoffe.

Solche Polyurethanschaumstoffe werden überwiegend als Dämmstoffe zur Kälte- und Wärmeisolation, zum Beispiel in Kühlgeräten, im Bauwesen, in Warmwasserspeichern, Erdgasspeichern und Fernwärmerohren verwendet. Mit dem Austausch von FCKW durch alternative Treibmittel, wie HFCKW, HFKW, $CO_2$ und Kohlenwasserstoffe erhöht sich der Aufwand der zum Erreichen eines gleichbleibend guten Brandschutzverhaltens betrieben werden muß. Dies äußert sich in der Regel in höheren Mengen an Flammschutzmittel, die den Formulierungen zugeführt werden müssen.

Wie schon oben erwähnt, führen monofunktionelle Alkohole (Monoole) zum Kettenabbruch bei der Herstellung von Polyurethanen aus polyfunktionellen Alkoholen und Polyisocyanaten, bzw. verringern die Netzwerkdichte eines eventuell vernetzten Polymeren. Daraus ergeben sich für Polyurethanschaumstoffe schlechte Schaumstoffeigenschaften und mangelhaftes Verarbeitungsverhalten. Deshalb wurden monofunktionelle Phosphonate als Flammschutzmittel in Formulierungen für Hartschaumstoffe auf Isocyanatbasis bisher nicht verwendet.

Überraschenderweise lassen sich die durch die erfindungsgemäße Verwendung der monohydroxyfunktionellen Flammschutzmittel befürchteten, negativen Verarbeitungs- und Produkteigenschaften der erfindungsgemäßen Polyurethanschaumstoffe vermeiden, wenn zur Herstellung der erfindungsgemäßen Polyurethanschaumstoffe geeignete Formulierungen und insbesondere erfindungsgemäß ein Flammschutzmittel der allgemeinen Formel I verwendet werden.

Gegenstand der vorliegenden Erfindung ist daher ein Polyurethan, dadurch gekennzeichnet, daß es ein Dialkylhydroxyalkanphosphonat der allgemeinen Formel I enthält. Solche Polyurethane werden im Rahmen der vorliegenden Erfindung auch als "mit Flammschutzmittel ausgerüstet" bezeichnet.

Unter "mit Flammschutzmittel ausgerüstet" wird im Rahmen des vorliegenden Textes verstanden, daß das Flammschutzmittel entweder in freier Form, also als Molekül der allgemeinen Formel I, oder als Derivat, insbesondere als Bestandteil einer Ester- oder Urethangruppe im Polyurethan enthalten ist. Die beiden letzteren Möglichkeiten umfassen dabei insbesondere, daß das Flammschutzmittel der allgemeinen Formel I terminal am Ende der Polymerkette kovalent über eine entsprechende Ester- oder Urethangruppe gebunden ist. Besonders bevorzugt ist es, wenn das Flammschutzmittel über eine Urethangruppe terminal am Polymerrückgrat befestigt ist.

Besonders bevorzugt ist es, wenn das erfindungsgemäße Polyurethan als Flammschutz eine Verbindung oder ein Gemisch aus zwei oder mehr Verbindungen ausgewählt aus der Gruppe bestehend aus Dimethyl-1-hydroxymethanphosphorat, Dimethyl-1-hydroxyethanphosphonat, Dimethyl-1-hydroxypropanphosphonat, Dimethyl-1-hydroxybutanphosphonat, Diethyl-1-hydroxymethanphosphonat und Diethyl-1-hydroxyethanphosphonat, enthält.

Neben dem erfindungsgemäßen Flammschutzmittel können noch weitere, von den erfindungsgemäß eingesetzten Dialkylhydroxyalkylphosphonaten verschiedene, Flammschutzmittel im erfindungsgemäßen Polyurethan vorliegen. In einer weiteren bevorzugten Ausführungsform der Erfindung liegt daher im erfindungsgemäßen Polyurethan noch mindestens ein weiteres flüssiges oder festes Flammschutzmittel, oder ein Gemisch aus zwei oder mehr davon, vor.

Flüssige Flammschutzmittel, die im erfindungsgemäßen Polyurethan vorliegen können, sind beispielsweise Dimethylmethanphosponat, Diethylethanphosponat, Triethylphosphat, Tributylphosphat, Tributoxyethylphosphat, in Triethylphosphat gelöstes Triphenylphosphat, Diphenylkresylphosphat, Resorcinol-bis-diphenylphosphat, Tris-(2-hydroxypropyl)phosphat, Tris-(5-hydroxy-3-oxapentyl)phosphat, Tris-(5-hydroxy-2,5-dimethyl-3-oxapentyl)phosphat, Tris-(2-hydroxypropyl)phosphit, Tris-(5-hydroxy-3-oxapentyl)phosphit, Tris-(5-hydroxy-2,5-dimethyl-3-oxapentyl)phosphit, Pentakis-(dipropylenglykol)diphosphat, Heptakis-(dipropylenglykol)triphophat, Pentakis-(dipropylenglykol)diphosphit, Heptakis-(dipropylenglykol)triphosphat, Tris(2-chlorethyl)phosphit, N,N-bis-(2-hydroxyethyl)aminomethandiethylphosphit, N,N-bis(2-hydroxypropyl)aminomethandiethylphosphit, Alkoxylierungsprodukte von Phosphorsäure, Polyphosphorsäuren und phosphoriger Säure, wobei als Alkoxylierungsmittel vorzugsweise Ethylenoxid und/oder Propylenoxid und/oder Butylenoxid verwendet werden, Tris-(2-chlorpropyl)phosphat, Tris-(2,3-dichlorpropyl)phosphat, Tetrakis-(2-chloretyl)ethylendiphosphat, gelöstes Dibromneopentylglykol und dessen Umsetzungsprodukte, gelöster Tribromneopentylalkohol und dessen Umsetzungsprodukte, gelöstes Dibrombutendiol und dessen Umsetzungsprodukte, gelöstes 2,3-Dibrompropanol und dessen Umsetzungsprodukte, gelöstes Tetrabromphthalsäureanhydrid und dessen Umsetzungsprodukte, gelöstes Tetrabrombisphenol A und dessen Umsetzungsprodukte, gelöstes Tribromphenol und dessen Umsetzungsprodukte, bromhaltige Phosphorsäureester und halogenierte Kohlenwasserstoffe, N,N',N"-Hexa-(2-hydroxyethyl)melamin, N,N',N"-Hexa-(2-hydroxypropyl)melamin, N,N',N"-Hexa-(5-hydroxy-3-oxapentyl)melamin und Hexa-(methoxymethyl)melamin.

Feste Flammschutzmittel, die im erfindungsgemäßen Polyurethan vorliegen können, sind beispielsweise Ammoniumphosphat, Ammoniumpolyphosphat, Diammoniumhydrogenphosphat, Ammoniumdihydrogenphosphat, Phospham, Melamin, Melamincyanurat, Melaminphosphat, Melaminpyrophosphat, Melaminborat, Melaminbarbiturat, Tris(hydroxyethyl)cyanurat, Aluminiumtrihydrat, Magnesiumhydroxid, Graphit, Blähgraphit, Calcium-, Barium- und Zinkborat, Zinkhydroxystannat, natürliche und modifizierte Stärken, Zellulose, Lignin, Zeolithe, Bentonit, Guanidincarbonat, Guanidinbarbiturat, Magnesiumcarbonat, Hydromagnesit und Huntit.

Die Verarbeitungs- und Produkteigenschaften der erfindungsgemäßen Polyurethane sind in der Regel vom Vernetzungsindex abhängig. Im Hinblick auf Verarbeitungs- und Produkteigenschaften des erfindungsgemäßen Polyurethans ist es bevorzugt, wenn alle zur Herstellung des Polyurethans eingesetzten Verbindungen mit gegenüber Isocyanaten reaktiven Wasserstoffatomen einen Vernetzungsindex $I_V$ von mindestens 3 aufweisen.

Die erfindungsgemäßen Polyurethane, insbesondere die erfindungsgemäßen Polyurethanschaumstoffe, sind erhältlich durch Umsetzung von mindestens

d) einem organischen Polyisocyanat als Komponente D, mit

e) einer höhermolekularen Verbindungen mit mindestens zwei gegenüber Isocyanaten reaktiven, Wasserstoffatome tragenden funktionellen Gruppen als Komponente E sowie

f) einem eine Hydroxygruppe tragenden Flammschutzmittel der allgemeinen Formel I als Komponente F sowie

g) gegebenenfalls einem Kettenverlängerungsmittel oder einem Vernetzungsmittel oder deren Gemischen und

h) gegebenenfalls einem Treibmittel und

i) gegebenenfalls einem Katalysator und

j) gegebenenfalls Zusatzstoffen oder Hilfsmitteln oder deren Gemischen.

Gegenstand der Erfindung ist daher auch ein Polyurethan, erhältlich durch Umsetzung von mindestens drei Komponenten D, E und F, wobei

d) als Komponente D ein organisches Polyisocyanat und

e) als Komponente E eine höhermolekularen Verbindung mit mindestens zwei gegenüber Isocyanaten reaktiven, Wasserstoffatome tragenden funktionellen Gruppen sowie

f) als Komponente F ein Dialkylhydroxyalkanposphonat der allgemeinen Formel I

eingesetzt wird.

Als organisches Polyisocyanat (Komponente D) kommen die an sich bekannten aliphatischen, cycloaliphatischen, araliphatischen und vorzugsweise aromatischen mehrwertigen Isocyanate in Frage.

Im einzelnen seien beispielhaft genannt: Alkylendiisocyanate mit 4 bis 12 Kohlenstoffatomen im Alkylenrest, wie 1,12-Dodecan-diisocyanat, 2-Ethyltetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophorondiisocyanat, IPDI), 2,4- und 2,6-Hexahydrotoluylen-diisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, Mischungen aus 4,4'-, 2,4'- und 2,2'-Diphenylmethandiisocyanaten und Polyphenylpolymethylen-polyisocyanaten (Roh-MDI) und Mischungen aus Roh-MDI und Toluylendiisocyanaten. Die organischen Di- und Polyisocyanate können einzeln oder in Form ihrer Gemische eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanu-rat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew. %, vorzugsweise von 31 bis 21 Gew. %, bezogen auf das Gesamtgewicht, wie sie sich aus der Umsetzung von Polyisocyanatmolekülen beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500 erhalten lassen, modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei zur Modifizierung beispielsweise Di- bzw. Polyoxyalkylenglykole einzeln oder als Gemische eingesetzt werden können.

Geeignete Di- oder Polyoxyalkylenglykole sind beispielsweise: Diethylenglykol, Dipropylenglykol, Polyoxyethylen-, Polyoxypropylen- und Polyoxypropylen-polyoxyethylen-glykole, -triole und/oder -tetrole. Geeignet sind auch NCO-Gruppen enthaltende Präpolymere mit NCO- gehalten von 25 bis 3,5 Gew.-%, vorzugsweise von 21 bis 14 Gew.-%, bezogen auf das Gesamtgewicht, hergestellt aus den nachfolgend beschriebenen Polyester- oder vorzugsweise Polyetherpolyolen oder deren Gemischen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4'- und/oder 2,6'-Toluylen-diisocyanat.

Die modifizierten Polyisocyanate können gegebenenfalls miteinander oder mit unmodifizierten organischen Polyisocyanaten, z.B. 2,4'-, 4,4'-Diphenyl-methan-diisocyanat, Roh-MDI, 2,4- und/oder 2,6-Toluylen-diisocyanat, gemischt werden.

Besonders bewährt haben sich Diphenylmethan-diisocyanat-Isomerengemische oder Roh-MDI mit einem Diphenylmethan-diisocyanatisomerengehalt von 33 bis 55 Gew.-% und urethangruppenhaltige Polyisocyanatgemische auf Basis von Diphenylmethan-diisocyanat mit einem NCO-Gehalt von 15 bis 33 Gew.-%.

Als höhermolekulare Verbindungen mit mindestens zwei reaktiven Wasserstoffatomen (Komponente E) werden zweckmäßigerweise solche mit einer Funktionalität von 2 bis 8, vorzugsweise 2 bis 6, und einem Molekulargewicht von 300 bis 8000, vorzugsweise von 300 bis 3000, verwendet. Bewährt haben sich z.B. Polyetherpolyamine und/oder

vorzugsweise Polyole ausgewählt aus der Gruppe der Polyetherpolyole, Polyesterpolyole, Polythioetherpolyole, Polyesteramide, hydroxygruppenhaltigen Polyacetale und hydroxygruppenhaltigen aliphatischen Polycarbonate oder Mischungen aus mindestens zwei der genannten Polyole. Vorzugsweise Anwendung finden Polyesterpolyole und/oder Polyetherpolyole. Der Hydroxylzahl der Polyhydroxylverbindungen beträgt dabei in aller Regel 150 bis 850 mg KOH/g und vorzugsweise 200 bis 600 mg KOH/g.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole sind: Ethandiol, Diethylenglykol, 1,2- bzw. 1,3- Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. aus ε-Caprolacton, oder aus Hydroxycarbonsäuren, z.B. aus ω-Hydroxycapronsäure.

Zur Herstellung der Polyesterpolyole können die organischen z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas wie Stickstoff, Kohlenmonoxid, Helium, Argon u.a., in der Schmelze bei Temperaturen von 150 bis 250°C, vorzugsweise 180 bis 220°C gegebenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmittel, wie z.B. Benzol, Toluol, Xylol oder Chlorbenzol, zur azeotropen Abdestillation des Kondensationswassers durchgeführt werden.

Zur Herstellung der Polyesterpolyole werden die organischen Polycarbonsäuren und/oder -derivate und mehrwertigen Alkohole vorteilhafterweise im Molverhältnis von 1:1 bis 1,8, vorzugsweise 1:1,5 bis 1:2, polykondensiert.

Die erhaltenen Polyesterpolyole besitzen vorzugsweise eine Funktionalität von 2 bis 4, insbesondere 2 bis 3, und ein Molekulargewicht von 480 bis 3000, vorzugsweise 600 bis 2000 und insbesondere 600 bis 1500.

Insbesondere als Polyole verwendet werden jedoch Polyetherpolyole, die nach bekannten Verfahren, beispielsweise durch anionische Polymerisation mit Alkalihydroxiden, wie z.B. Natrium- oder Kaliumhydroxid oder Alkalialkoholaten, wie z.B. Natriummethylat, Natrium- oder Kaliumethylat oder Kaliumisopropylat, als Katalysatoren und unter Zusatz mindestens eines Startermoleküls, das 2 bis 8 , vorzugsweise 2 bis 6, reaktive Wasserstoffatome gebunden enthält, oder durch kationische Polymerisation mit Lewissäuren, wie Antimonpentachlorid, Bortrifluorid-Etherat u.a. oder Bleicherde, als Katalysatoren aus einem oder mehreren Alkylenrest hergestellt werden.

Geeignete Alkylenoxide sind beispielsweise Tetrahydrofuran, 1,3-Propylenoxid, 1,2- bzw. 2,3-Butylenoxid, Stryroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-,N, N- und N,N'-dialkylsubstituierte Diamine mit 1 bis 4 Kohlenstoffatomen im Alkylrest, wie gegebenenfalls mono- und dialkylsubstituiertes Ethlylendiamin, Diethylentriamin, Triethylentetramin, 1,3-Propylendiamin, 1,3-bzw. 1,4-Butylendiamin, 1,2-, 1,3-, 1,4-, 1,5- und 1,6- Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyl-diethanolamin, und Trialkanolamine, wie z.B. Triethanolamine, und Ammoniak. Vorzugsweise verwendet mehrwertige, insbesondere zwei- und/oder dreiwertige Alkohole, wie Ethandiol, Propandiol-1,2 und 1,3, Diethylenglykol, Dipropylenglykol, Butandiol-1,4, Hexandiol-1,6, Glycerin, Trimethylolpropan, Pentaerythrit, Sorbit und Saccharose.

Vorzugsweise wird im Rahmen der vorliegenden Erfindung als höhermolekulare Verbindung mit mindestens zwei gegenüber Isocyanaten reaktiven Wasserstoffatomen (Komponente E) zur Herstellung des erfindungsgemäßen Polyurethans ein Polyetheralkohol oder ein Gemisch aus Polyetheralkoholen eingesetzt, die aus der Oxalkylierung von

Sorbit oder Saccharose oder deren Gemisch erhältlich sind.

Die Polyetherpolyole, vorzugsweise Polyoxypropylen- und Polyoxypropylenpolyoxyethylenpolyole, besitzen eine Funktionalität von vorzugsweise 2 bis 6 und insbesondere 2 bis 4 und Molekulargewichte von 300 bis 3000, vorzugsweise 300 bis 2000 und insbesondere 400 bis 2000. Geeignete Polyoxytetramethylenglykole weisen ein Molekulargewicht bis zu ungefähr 3500 auf.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitrilbasis, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyetherpolyolen analog den Angaben der deutschen Patentschriften 11 394, 12 22 669 (US 3 304 273, 3 383 351, 3 523 093), 11 52 536 (GB 10 40 452) und 11 52 537 (GB 987 618) hergestellt werden, sowie Polyetherpolyoldispersionen, die als disperse Phase, üblicherweise in einer Menge von 1 bis 50 Gew. %, vorzugsweise 2 bis 25 Gew. %, z.B. Polyharnstoffe, Polyhydrazide, tert.-Aminogruppen aufweisende Polyurethane oder Melamin oder Gemische aus zwei oder mehr davon und die z.B. beschrieben werden in der EP-B 011 752 (US 4 304 708), US-A-4 374 209 und DE-A-32 31 497.

Die Polyetherpolyole können ebenso wie die Polyesterpolyole einzeln oder in Form von Mischungen verwendet werden. Ferner können sie mit den Pfropfpolyetherpolyolen oder Polyesterpolyolen sowie den hydroxylgruppenhaltigen Polyesteramiden, Polyacetalen, Polycarbonaten und/oder Polyetherpolyaminen gemischt werden.

Als hydroxygruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-1,3, Butandiol-1,4 oder Hexandiol-1,6, Diethylenglykol, Triethylenglykol oder Tetraethylenglykol, oder Gemische aus zwei oder mehr davon mit Diarylcarbonaten, z.B. Diphenylcarbonat, oder Phosgen, hergestellt werden können.

Zu den Polyesteramiden zählen z.B. die aus mehrwertigen, gesättigten oder ungesättigten Carbonsäuren bzw. deren Anhydriden oder Gemischen aus zwei oder mehr davon und mehrwertigen gesättigten oder ungesättigten Aminoalkoholen oder Mischungen aus mehrwertigen Alkoholen und Aminoalkoholen oder Polyaminen, oder Gemischen aus zwei oder mehr der genannten Verbindungen und Mischungen, gewonnenen, vorwiegend linearen Kondensate.

Geeignete Polyetherpolyamine können aus den obengenannten Polyetherpolyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die teilweise oder vollständige Aminierung von Polyoxyalkylenpolyolen mit Aminen oder Ammoniak in Gegenwart von Wasserstoff und Katalysatoren (DE 12 15 373).

In einer bevorzugten Ausführungsform der Erfindung werden zur Herstellung der Polyurethane wenigstens anteilig Polyole eingesetzt, deren Zahl der Hydroxygruppen vier oder mehr beträgt.

Als erfindungsgemäße, phosphorhaltige Flammschutzmittel kommen prinzipiell Dialkylhydroxyalkanphosphonate der allgemeinen Formel I

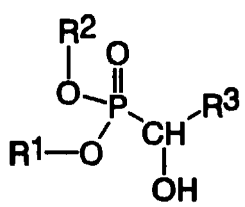

(I)

worin $R^1$ und $R^2$ jeweils unabhängig voneinander für einen linearen oder verzweigten, gegebenenfalls mit Halogen oder Hydroxygruppen substituierten $C_{1-10}$-Alkylrest oder $C_{6-13}$-Aryl- oder $C_{7-14}$-Benzylrest stehen und $R^3$ für Wasserstoff oder einen linearen oder verzweigten $C_{1-10}$-Alkylrest oder für einen $C_{6-13}$-Aryl-, $C_{7-14}$-Benzyl- oder Furfurylrest steht,

in Frage. Insbesondere handelt es sich dabei um Verbindungen die mit Hilfe des erfindungsgemäßen Verfahrens hergestellt wurden.

Bevorzugt sind im Rahmen der vorliegenden Erfindung Verbindungen der allgemeinen Formel I, bei denen $R^1$ und $R^2$ jeweils unabhängig voneinander für einen linearen $C_{1-6}$-Alkylrest und $R^3$ für Wasserstoff oder einen linearen $C_{1-6}$-Alkylrest steht. Besonders bevorzugt ist es, wenn $R^1$ und $R^2$ jeweils unabhängig voneinander für einen linearen $C_{1-3}$-Alkylrest und $R^3$ für Wasserstoff oder einen linearen $C_{1-4}$-Alkylrest steht.

Die erfindungsgemäßen Polyurethanschaumstoffe können ohne oder unter Mitverwendung von Kettenverlängerungs oder Vernetzungsmitteln oder deren Gemischen hergestellt werden. Zur Modifizierung der mechanischen

Eigenschaften, z.B. der Härte, kann sich jedoch der Zusatz von Kettenverlängerungsmitteln, Vernetzungsmittel oder gegebenenfalls auch Gemischen davon als vorteilhaft erweisen.

Als Kettenverlängerungs- oder Vernetzungsmittel verwendet werden beispielsweise Diole oder Triole mit Molekulargewichten kleiner als 400, vorzugsweise etwa 60 bis etwa 300, oder Gemische aus zwei oder mehr davon. In Betracht kommen beispielsweise aliphatische, cycloaliphatische oder araliphatische Diole, oder Gemische aus zwei oder mehr davon mit 2 bis 14, vorzugsweise 4 bis 10 Kohlenstoffatomen, z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxycyclohexan, Glycerin und Trimethylolpropan und niedermolekulare hydroxygruppenhaltige Polyalkylenoxide auf Basis Ethylen- oder 1,2-Propylenoxid oder deren Gemisch und den vorgenannten Diolen oder Triolen, oder deren Gemischen, als Startermoleküle.

Sofern zur Herstellung der Polyurethanschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 1 bis 8 Gew.-%, bezogen auf das Gewicht der Komponente E zum Einsatz.

Als Treibmittel können die aus der Polyurethanchemie allgemein bekannten Fluorchlorkohlenwasserstoffe (FCKW) sowie hoch- und/oder Perfluorkohlenwasserstoffe verwendet werden. Der Einsatz dieser Stoffe wird jedoch aus ökologischen Gründen stark eingeschränkt bzw. ganz eingestellt. Neben den HFCKW und den HFKW bieten sich niedrig siedende organische Flüssigkeiten, insbesondere aliphatische oder cycloaliphatische Kohlenwasserstoffe, insbesondere Pentan und Cyclopentan, oder Acetale, wie z.B. Methylal, oder Gemische aus zwei oder mehr davon, als Alternativtreibmittel an.

Diese physikalischen Treibmittel werden üblicherweise der Polyolkomponente des Systems zugesetzt. Sie können jedoch auch in der Isocyanatkomponente oder als Kombination sowohl der Polyolkomponente als auch der Isocyanatkomponente zugesetzt werden.

Möglich ist auch ihre Verwendung, zusammen mit hoch- oder perfluorierten Kohlenwasserstoffen, oder deren Gemischen, in Form einer Emulsion der Polyolkomponente. Als Emulgatoren, sofern sie Anwendung finden, werden üblicherweise oligomere Acrylate eingesetzt, die als Seitengruppen Polyoxyalkylen- und Fluoralkanreste gebunden enthalten und einen Fluorgehalt von ungefähr 5 bis 30 Gew.-% aufweisen. Derartige Produkte sind aus Kunststoffchemie hinreichend bekannt, z.B. EP-A-0 351 614.

Die eingesetzte Menge des Treibmittels bzw. der Treibmittelmischung liegt dabei bei 1 bis 25 Gew.-%, vorzugsweise 1 bis 15 Gew.-%, jeweils bezogen auf die Komponente E.

Weiterhin ist es möglich und üblich, als Treibmittel der Komponente E Wasser in einer Menge von 0,5 bis 15 Gew.-%, vorzugsweise 1 bis 5 Gew.-%, bezogen auf die Komponente E, zuzusetzen. Der Wasserzusatz kann in Kombination mit dem Einsatz der anderen beschriebenen Treibmittel erfolgen.

Als Katalysatoren zur Herstellung der erfindungsgemäßen Polyurethanschaumstoffe werden die in der Polyurethanchemie üblichen Katalysatoren eingesetzt. Insbesondere werden Verbindungen verwendet, die die Reaktion der reaktive Wasserstoffatome, insbesondere Hydroxylgruppen, enthaltenden Verbindungen der Komponenten E und gegebenenfalls F mit den organischen, gegebenenfalls modifizierten organischen Isocyanaten (Komponente D) stark beschleunigen. In Betracht kommen organische Metallverbindungen, wie Eisen-(II)-chlorid, Zinkchlorid, Bleioctoat und vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat, und Dialkylzinn-(IV)-salze von organischen Carbonsäuren, z.B. Dibutylzinndiacetat, Dibutylzinndilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldietylentriamin, Tetramethyldiaminoethylether, Bis-(dimethylimidazol, 1-Aza-bicyclo-(3,3,0)-octan und vorzugsweise 1,4-Diazabicyclo-(2,2,2)-octan, und Alkanolverbindungen, wie Triethanolamin, Triisopropanolamin, N-Methyl- und N-Ethyldiethanolamin und Dimethylethanolamin, oder Gemischen aus zwei oder mehr davon. Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxid, wie Natriumhydroxid, und Alkaliakoholate, wie Natriummethylat und Kaliumisopropylat, sowie Alkalisalze von Fettsäuren mit 1 bis 20 C-Atomen, beispielsweise Kaliumformiat, Kaliumacetat und Kalium-2-ethylhexanoat, und gegebenenfalls seitenständigen OH-Gruppen, oder Gemische aus zwei oder mehr davon.

Vorzugsweise verwendet werden 0,001 bis 5 Gew.-%, insbesondere 0,05 bis 2 Gew.-%, Katalysator bzw. Katalysatorkombination, bezogen auf das Gewicht der Komponente E.

Der Reaktionsmischung zur Herstellung der Polyurethanschaumstoffe können gegebenenfalls noch weitere Hilfsmittel oder Zusatzstoffe oder deren Gemische einverleibt werden. Genannt seien beispielsweise oberflächenaktive Substanzen, Schaumstabilisatoren, Zellregler, Füllstoffe, Farbstoffe und Pigmente.

Als oberflächenaktive Substanzen kommen z.B. Verbindungen in Betracht, welche zur Unterstützung der

Homogenisierung der Ainsgangsstoffe dienen und gegebenenfalls auch geeignet sind, die Zellstruktur der Kunststoffe zu regulieren. Genannt seien beispielsweise Emulgatoren, wie die Natriumsalze der Ricinusölsulfate oder der Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure, Schaumstabilisatoren, wie Siloxanoxalkylenmischpolymerisate und andere Organopolysiloxane, oxethylierte Alkylphenole, oxethylierte Fettalkohole, Paraffinöle, Ricinusöle- bzw. Ricinolsäureester, Türkischrotöl und Erdnußöl` und Zellregler, wie Paraffine, Fettalkohole und Dimethylpolysiloxane. Zur Verbesserung der Emulgierwirkung, der Zellstruktur und der Stabilisierung des Schaums eignen sich ferner die oben beschriebenen oligomeren Acrylate mit Polyoxyalkylen- und Fluoralkanresten als Seitengruppen. Die Oberflächenaktiven Substanzen werden üblicherweise in Mengen von 0,01 bis 5 Gew.-Teilen, bezogen auf 100 Gew.-Teile der Komponente E angewandt.

Als Füllstoffe, insbesondere als verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe, wie silikatische Mineralien, beispielsweise Schichtsilikate, wie Antigorit, Serpentin, Hornblenden, Amphibole, Chrysotil und Talkum, Metalloxide, wie Kaolin, Aluminiumoxide, Titanoxide und Eisenoxide, Metallsalze, wie Kreide, Schwerspat und anorganische Pigmente, wie Kaliumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Kohle, Kollophonium, Cyccalopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.

Die anorganischen und organischen Füllstoffe können einzeln oder als Gemisch aus zwei oder mehr der genannten Substanzen verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten D bis F, einverleibt, wobei jedoch der Gehalt an Matten, Vliesen und Geweben aus natürlichen und synthetischen Fasern Werte bis 80 Gew.-% erreichen kann.

Nähere Angaben über die oben genannten anderen üblichen Hilfs- und Zusatzstoffe sind der Fachliteratur, beispielsweise der Monographie von J.H. Saunders und K.G. Frisch "High Polymers" Band XVI, Polyurethanes, Teil 1 und 2, Verlag Interscience Publishers 1962 bzw. 1964, oder dem Kunststoffhandbuch, Polyurethane, Band VII, Hanser-Verlag München, Wien, 1., 2. und 3. Auflage, 1966, 1983 und 1993 zu entnehmen.

Zur Herstellung der Polyurethanschaumstoffe werden die organischen, gegebenenfalls modifizierten Isocyanate (Komponente D), höhermolekularen Verbindungen mit mindestens zwei reaktiven Wasserstoffatomen (Komponente E) und gegebenenfalls Kettenverlängerungs- oder Vernetzungsmittel (g) in solchen Mengen zur Umsetzung gebracht, daß das Äquivalenzverhältnis von NCO-Gruppen der Isocyanate (Komponente D) zur Summe der reaktiven Wasserstoffatome der Komponenten E und F 0,80 bis 1,25:1, vorzugsweise 0,90 bis 1,15:1, beträgt.

Bevorzugt ist bei der Herstellung der erfindungsgemäßen Polyurethanschaumstoffe die Mitverwendung von Polyolen, die eine Funktionalität von mindestens 3, vorzugsweise von mindestens 4 aufweisen. Besonders bevorzugt ist die Mitverwendung von Polyetherpolyolen auf Basis von Sorbit und/oder Saccharose und Alkylenoxiden. Weiterhin wurde gefunden, daß die Schaumstofformulierungen für die Herstellung von flammgeschützten Polyurethanschaumstoffen günstige Verarbeitungseigenschaften aufweisen, wenn der Vernetzungsindex $I_V$ aller gegenüber Isocyanaten reaktive Wasserstoffatome aufweisenden Verbindungen, einschließlich des erfindungsgemäßen Flammschutzmittels, mindestens 3,0 beträgt.

Gegenstand der Erfindung ist daher auch ein Verfahren zur Herstellung von Polyurethanen durch Umsetzung von mindestens drei Komponenten D, E und F, wobei

d) als Komponente D ein organisches Polyisocyanat und
e) als Komponente E eine höhermolekularen Verbindung mit mindestens zwei gegenüber Isocyanaten reaktiven, Wasserstoffatome tragenden funktionellen Gruppen sowie
f) als Komponente F ein Dialkylhydroxyalkanphosphonat der allgemeinen Formel I

eingesetzt wird.

Als Vernetzungsindex im Sinne der vorliegenden Erfindung wird eine dimensionslose Kennziffer verstanden, die das Vernetzungsvermögen der Gesamtheit aller Verbindungen beschreibt, die zur Reaktion mit Isocyanatkomponenten befähigte Wasserstoffatome tragen. Der Vernetzungsindex $I_V$ wird nach folgender Formel berechnet:

$$I_v = \frac{(m_1{}^*Z^*f_1 + m_2{}^*Z_2{}^*f_2 + ... + m_n{}^*Z_n{}^*f_n)}{(m_1{}^*Z_1 + m_2{}^*Z_2 + ... + m_n{}^*Z_n)}$$

Wobei die einzelnen Symbole folgende Bedeutung haben:

| | |
|---|---|
| $I_V$ | Vernetzungsindex, |
| $m_i = m_1; m_2; ... m_n$ | Masseanteile aller Verbindungen, die zur Reaktion mit der Isocyanatkomponente befähigte Wasserstoffatome tragende Gruppen aufweisen, |
| $Z_i = Z_1; Z_2; ... Z_n$ | Hydroxylzählen aller Verbindungen, die zur Reaktion mit der Isocyanatkomponente befähigte Wasserstoffatome tragende Gruppen aufweisen, |
| $f_i = f_1; f_2; ... f_n$ | Funktionalitäten aller Verbindungen, die zur Reaktion mit der Isocyanatkomponente befähigte Wasserstoffatome tragende Gruppen aufweisen. |

Die Polyurethanschaumstoffe werden vorteilhafterweise nach dem "one-shot-Verfahren", beispielsweise mit Hilfe der Hochdruck- oder Niederdruck-Technik in offenen oder geschlossenen Formwerkzeugen, beispielsweise metallischen Formwerkzeugen hergestellt. Üblich ist auch die kontinuierliche Auftragung des Reaktionsgemisches auf geeigneten Bandstraßen zur Erzeugung von Schaumblöcken.

Die erfindungsgemäßen Polyurethanschaumstoffe weisen eine Dichte von 10 bis 800 $kg/m^3$, vorzugsweise von 35 bis 100 $kg/m^3$ und insbesondere von 25 bis 80 $kg/m^3$, auf. Besonders eignen sich die erfindungsgemäßen flexiblen Polyurethanschaumstoffe als Polstermaterial im Möbel- und Automobilbereich, insbesondere zur Herstellung von Fahrzeugsitzen. Sie können auch als flexibles Dichtungsmaterial im Bainwesen Verwendung finden. Bei entsprechend höheren Rohdichten sind sie ebenfalls als Integralschaumteil im Fahrzeugsicherheitsbereich einsetzbar. Die erfindungsgemäßen starren Polyurethanschaumstoffe finden vorzugsweise als Baustoffe und insbesondere als solche mit wärmedämmenden Eigenschaften Verwendung.

Ebenfalls Gegenstand der Erfindung ist damit die Verwendung eines erfindungsgemäßen Polyurethans oder eines Polyurethans, das nach einem erfindungsgemäßen Verfahren hergestellt ist, als Dämmstoff, Polstermaterial, flexibles Dichtungsmaterial oder als Integralschaum.

Der erfindungsgemäß bevorzugte Gehalt an Phosphonat der allgemeinen Formel I beträgt etwa 0,1 bis etwa 30 Gew.-%, vorzugsweise etwa 1 bis etwa 15 Gew.-%, und besonders bevorzugt etwa 2 bis etwa 8 Gew.-%, bezogen auf das gesamte Polyurethan.

Bevorzugt verwendete Phosphonate der allgemeinen Formel I sind Dimethyl-1-hydroxymethanphosphonat, Dimethyl-1-hydroxyethanphosphonat, Dimethyl-1-hydroxypropanphosphonat, Dimethyl-1-hydroxybuthanphosphonat, Diethyl-1-hydroxymethanphosphonat, Diethyl-1-hydroxyethanphosphonat.

In einer weiteren bevorzugten Ausführungsform der Erfindung liegt bei der Umsetzung zusätzlich noch mindestens ein weiteres flüssiges oder festes Flammschutzmittel oder deren Gemisch vor.

Flüssige Flammschutzmittel, die mitverwendet werden können, sind beispielsweise Dimethylmethanphosponat, Diethylethanphosponat, Triethylphosphat, Tributylphosphat, Tributoxyethylphosphat, in Triethylphosphat gelöstes Triphenylphosphat, Diphenylkresylphosphat, Resorcinol-bis-diphenylphosphat, Tris-(2-hydroxypropyl)phosphat, Tris-(5-hydroxy-3-oxapentyl)phosphat, Tris-(5-hydroxy-2,5-dimethyl-3-oxapentyl)phosphat, Tris-(2-hydroxypropyl)phosphit, Tris-(5-hydroxy-3-oxapentyl)phosphit, Tris-(5-hydroxy-2,5-dimethyl-3-oxapentyl)phosphit, Pentakis-(dipropylenglykol)diphosphat, Heptakis-(dipropylenglykol)triphosphat, Pentakis-(dipropylenglykol)diphosphit, Heptakis-(dipropylenglykol)triphosphat, Tris-(2-chlorethyl)phosphit, N,N-bis-(2-hydroxyethyl)aminomethandiethylphosphit, N,N-bis-(2-hydroxypropyl)aminomethandiethylphosphit, Alkoxylierungsprodukte von Phosphorsäure, Polyphosphorsäuren und phosphoriger Säure, wobei als Alkoxylierungsmittel vorzugsweise Ethylenoxid oder Propylenoxid oder Butylenoxid, oder ein Gemisch aus zwei oder mehr davon verwendet wird; Tris-(2-chlorpropyl)phosphat, Tris-(2,3-dichlorpropyl)phosphat, Tetrakis-(2-chloretyl)ethylendiphosphat, gelöstes Dibromneopentylglykol und dessen Umsetzungsprodukte, gelöstes Tribromneopentylalkohol und dessen Umsetzungsprodukte, gelöstes Dibrombutendiol und dessen Umsetzungsprodukte, gelöstes 2,3-Dibrompropanol und dessen Umsetzungsprodukte, gelöstes Tetrabromphthalsäureanhydrid und dessen Umsetzungsprodukte, gelöstes Tetrabrombisphenol A und dessen Umsetzungsprodukte, gelöstes Tribromphenol und dessen Umsetzungsprodukte, bromhaltige Phosphorsäureester und halogenierte Kohlenwasserstoffe, N,N',N''-Hexa-(2-hydroxyethyl)melamin, N,N',N''-Hexa-(2-hydroxypropyl)melamin, N,N',N''-Hexa-(5-hydroxy-3-oxapentyl)melamin und Hexa-(methoxymethyl)melamin, sowie Gemische aus zwei oder mehr der genannten Verbindungen.

Feste Flammschutzmittel, die mitverwendet werden können, sind beispielsweise Ammoniumphosphat, Ammoniumpolyphosphat, Diammoniumhydrogenphosphat, Ammoniumdihydrogenphosphat, Phospham, Melamin, Melamincyanurat, Melaminphosphat, Melaminpyrophosphat, Melaminborat, Melaminbarbiturat, Tris(hydroxyethyl)cyanurat, Aluminiumtrihydrat, Magnesiumhydroxid, Graphit, Blähgraphit, Calcium-, Barium- und Zinkborat, Zinkhydroxystannat, natürliche und modifizierte Stärken, Zellulose, Lignin, Zeolithe, Bentonit, Guanidincarbonat, Guanidinbarbiturat, Magnesiumcarbonat, Hydromagnesit oder Huntit, sowie Gemische aus zwei oder mehr davon.

Ebenfalls Gegenstand der Erfindung ist die Verwendung eines Dialkylhydroxyalkanphosphonats der allgemeinen Formel I als Flammschutzmittel in Polyurethanen.

Nachfolgend wird die Erfindung durch Beispiele erläutert.

**Beispiele**

Synthese von Dimethyl-1-hydroxymethanphosphonat

In einer 1 Liter Standardreaktionsapparatur aus Vierhalskolben, Rückflußkühler, Tropftrichter und KPG-Rührer wurden nacheinander 110 g Dimethylphosphit und 30 g Paraformaldehyd vorgelegt und auf eine Temperatur von 35°C erwärmt. Anschließend wurden 4,15 g Triethylamin hinzugesetzt und die Temperatur des Reaktionsgemischs auf 135°C erhöht. Diese Temperatur wurde für drei Minuten gehalten. Anschließend wurde der Ansatz möglichst schnell (innerhalb von etwa 2 bis etwa 10 Minuten) auf 37°C heruntergekühlt und für eine Zeitspanne von etwa 10 bis etwa 30 Minuten bei dieser Temperatur gerührt. Nachfolgend wurde das Reaktionsgemisch bei 50°C und einem Druck von 0,5 mbar einer Destillation zur Entfernung leichtflüchtiger Nebenprodukte unterzogen.

Das in einer Ausbeute von 97 % anfallende Dimethyl-1-hydroxymethanphosphonat wies eine OH-Zähl von 382 mg KOH/g, einen P-Gehalt von 22,1 % und eine Viskosität von 20 mPas bei 25°C auf.

2. Beispiele zum Einsatz der erfindungsgemäßen Phosphonate als Flammschutzmittel in Polyurethanen

Erläuterungen zu den Beispielen/Vergleichsbeispielen:

| | |
|---|---|
| Polyol 1: | Polyetheralkohol auf Basis Saccharose, Glycerin und Propylenoxid (OH-Zahl 402) |
| Polyol 2: | Polyetheralkohol auf Basis Saccharose, Glycerin und Propylenoxid (OH-Zahl 490) |
| Polyol 3: | Polyesteralkohol auf der Basis von Phthalsäureanhydrid und Diethylenglykol |
| Polyol 4: | Polyetheralkohol auf Basis Sorbit, Propylenglykol und Propylenoxid |
| Polyol 5: | Polyetheralkohol auf Basis Sorbit, Wasser und Propylenoxid |
| Flammschutzmittel 1: | Chlor und Brom enthaltender Polyetheralkohol (Ixol B251 der Fa. Solvay) |
| Flammschutzmittel 2: | Tris-(chlorpropyl)-phosphat |
| Flammschutzmittel 3: | N,N-Bis-(2-hydroxyethyl)aminomethan-phosphonsäurediethylester |
| Flammschutzmittel 4: | Diphenylkresylphosphat |
| Flammschutzmittel 5: | Ammoniumpolyphosphat |
| Schaumstabilisator 1: | Tensid auf siliciumorganischer Basis (Tegostab B 8466 der Fa. Goldschmidt) |
| Isocyanat 1: | Roh-Diphenylmethandiisocyanat (NCO-Gehalt 31.1 %) |

Beispiele 1 und 2 und Vergleich 1:

Diese Beispiele sollen die vorteilhafte Wirkung des erfindungsgemäßen Phosphonats auf das Brandverhalten und die Aushärtung im Vergleich zum Flammschutzmittel 3, das dem gegenwärtigen Stand der Technik entspricht, demonstrieren.

Aus den in der folgenden Tabelle 1 angegebenen Mengen wurden jeweils 1000 g Polyolkomponente abgemischt. Durch Vermischen von Teilmengen der Polyolkomponente mit dem Treibmittel und dem Isocyanat im in Tabelle 1 angegebenen Verhältnis wurde der Hartschaumstoff hergestellt. Durch Ausschäumen einer Aluminiumform der Abmessung 20 cm x 20 cm x 20 cm mit 500 g Reaktionsgemisch wurden die Prüfkörper für den Kleinbrennertest nach DIN 4102 hergestellt. Das Brandverhalten wurde 24 Stunden nach Herstellung getestet. Die Aushärtung wurde an einem freigeschäumten 11-Becher aus 80 g Reaktionsgemisch ermittelt. Dazu wurde ein Stahlbolzen 6 Minuten nach dem Beginn der Vermischung 10 mm tief in die aushärtende Schaumoberfläche gedrückt und die dazu erforderliche Kraft gemessen.

Tabelle 1

| | Hydroxylzahl | Beispiel 1 | Beispiel 2 | Vergleich 1 |
|---|---|---|---|---|
| Polyol 2 | 490 | 10,0 | 20,0 | 10,0 |
| Polyol 3 | 239 | 10,0 | 10,0 | 10,0 |
| Polyol 5 | 340 | 39,4 | 30,4 | 34,5 |
| Dimethyl-1-hydroxymethanphosphonat | 340 | 15,0 | 15,0 | |
| Flammschutzmittel 3 | 450 | | | 21,5 |
| Flammschutzmittel 1 | 330 | 15,0 | 15,0 | 15,0 |
| Flammschutzmittel 2 | | 5,0 | 5,0 | 5,0 |
| Glycerin | 1805 | 1,5 | 0,5 | |
| Schaumstabilisator 1 | | 0,7 | 0,7 | 0,7 |
| Dimethylcyclohexylamin | | 1,5 | 1,5 | 1,4 |
| Wasser | 6230 | 1,9 | 1,9 | 1,9 |
| Summe | | 100,0 | 100,0 | 100,0 |
| Treibmittel R141b | | 8,0 | 8,0 | 8,0 |
| | NCO [%] | | | |
| Isocyanat 1 | 31,1 | 145 | 145 | 145 |
| Brandverhalten nach DIN 4102 | | B 2 | B 2 | B 2 |
| Flammenhöhe in cm | | 11,5 | 12,3 | 13,0 |
| Aushärtung in N | | 85 | 84 | 75 |

Beispiele 3 und 4:

Diese Beispiele demonstrieren die Wirkung verschiedener erfindungsgemäßer Phosphonate in Verbindung mit dem festen Flammschutzmittel Ammoniumpolyphosphat. Die verwendeten Formulierungen und Ergebnisse sind in Tabelle 2 zusammengestellt. Es wurde wie bei den Beispielen 1 und 2 verfahren. Die Aushärtung wurde nicht bestimmt.

Tabelle 2

| | Hydroxylzahl | Beispiel 3 | Beispiel 4 |
|---|---|---|---|
| Polyol 1 | 402 | 33,0 | 33,0 |
| Polyol 2 | 490 | 10,0 | 10,0 |
| Diethyl-1-hydroxymethanphosphonat | 311 | 18,0 | |
| Diethyl-1-Hydroxyethanphosphonat | 265 | | 18,0 |
| Flammschutzmittel 4 | | 5,0 | 5,0 |
| Flammschutzmittel 5 | 1805 | 29,0 | 29,0 |
| Schaumstabilisator 1 | | 2,0 | 2,0 |
| Dimethylcyclohexylamin | | 1,4 | 1,4 |
| Wasser | 6230 | 1,6 | 1,6 |
| Summe | | 100,0 | 100,0 |
| Treibmittel Cyclopentan | | 5,0 | 5,0 |
| | NCO [%] | | |
| Isocyanat 1 | 31,1 | 100 | 100 |
| Brandverhalten nach DIN 4102 | | B 2 | B 2 |
| Flammenhöhe in cm | | 11,4 | 12,1 |

Beispiele 5 bis 7:

Diese Beispiele demonstrieren die Wirkung des Vernetzungsindex $I_V$ auf die Verarbeitungseigenschaften.

Aus den in der folgenden Tabelle 3 angegebenen Mengen wurden jeweils 200 kg Polyolkomponente abgemischt. Durch Verarbeiten der Polyolkomponente mit dem Treibmittel und dem Isocyanat auf einer 12m-Doppeltransportbandanlage wurde der Hartschaumstoff hergestellt.

Es wurde Plattenware mit einer Stärke von 150 mm hergestellt. Zur Beurteilung der Versuchsergebnisse wird die Aushärtung beim Verlassen des Doppeltransportbandes und die Rißanfälligkeit nach dem Ablängen der Platten beobachtet. Weiterhin wird das Brandverhalten des Hartschaumes nach DIN 4102 überprüft. Die Ergebnisse sind in der nachfolgenden Tabelle 3 zusammengefaßt.

Tabelle 3

| | Hydroxylzahl ($Z_i$) | Funktionalität ($f_i$) | Beispiel 5 | Beispiel 6 | Beispiel 7 |
|---|---|---|---|---|---|
| Polyol 1 | 402 | 4,3 | 23,8 | 32,2 | |
| Polyol 2 | 490 | 4,3 | 26,2 | | 26,6 |
| Polyol 3 | 490 | 2,0 | | | 26,0 |
| Polyol 4 | 239 | 5,3 | | 15,0 | |
| Dimethyl-1-hydroxyethanphosphonat | 340 | 1,0 | 8,0 | 10,0 | 11,0 |
| Flammschutzmittel 1 | 330 | 3,0 | 12,0 | 12,0 | |
| Flammschutzmittel 2 | | | 24,0 | 24,0 | 27,0 |
| Glycerin | 1805 | 3,0 | 1,6 | 2,4 | 5,0 |
| Schaumstabilisator 1 | | | 1,0 | 1,0 | 1,0 |
| Dimethylcyclohexylamin | | | 1,5 | 1,5 | 1,5 |
| Wasser | 6230 | 2,0 | 1,9 | 1,9 | 1,9 |
| Summe | | | 100,0 | 100,0 | 100,0 |
| Vernetzungsindex | | | 3,26 | 3,34 | 2,80 |
| Treibmittel R 141b | | | 9,0 | 9,0 | 9,0 |
| | NCO [%] | | | | |
| Isocyanat 1 | 31,1 | | 138 | 138 | 138 |
| Brandverhalten nach DIN 4102 | | | B2 | B2 | B2 |
| Flammenhöhe in cm | | | 11,5 | 12,3 | 13,0 |
| Aushärtung am Bandende | | | gut | gut | gering |
| Rißanfälligkeit | | | keine | keine | im Schaum |

**Patentansprüche**

1. Verfahren zur Herstellung von Dialkylhydroxyalkanphosphonaten der allgemeinen Formel I

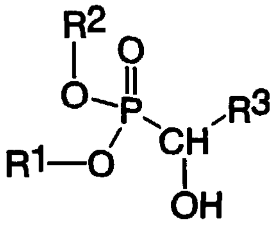

(I)

worin $R^1$ und $R^2$ jeweils unabhängig voneinander für einen linearen oder verzweigten, gegebenenfalls mit Halogen oder Hydroxygruppen substituierten $C_{1-10}$-Alkylrest oder $C_{6-13}$-Aryl- oder $C_{7-14}$-Benzylrest stehen, und $R^3$ für Wasserstoff oder einen linearen oder verzweigten $C_{1-10}$-Alkylrest oder für einen $C_{6-13}$-Aryl-, $C_{7-14}$-Benzyl- oder Furfurylrest steht, bei dem ein Reaktionsgemisch, enthaltend

a) ein Phosphonat der allgemeinen Formel II

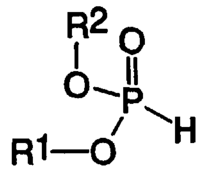

(II)

worin $R^1$ und $R^2$ jeweils unabhängig voneinander für einen linearen oder verzweigten, gegebenenfalls mit Halogen oder Hydroxygruppen substituierten $C_{1-10}$-Alkylrest oder $C_{6-13}$-Aryl- oder $C_{7-14}$-Benzylrest steht, als Komponente A,
und

b) einen Aldehyd der allgemeinen Formel III

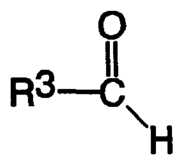

(III)

worin $R^3$ für Wasserstoff oder einen linearen oder verzweigten $C_{1-10}$-Alkylrest oder für einen $C_{6-13}$-Aryl-, $C_{7-14}$-Benzyl- oder Furfurylrest steht, als Komponente B,
zusammen mit

c) einem basischen Katalysator, als Komponente C

umgesetzt wird, dadurch gekennzeichnet, daß ein Gemisch der Komponenten A und B und C auf eine Temperatur von 20 bis 60°C gebracht wird, oder ein Gemisch der Komponenten A und B oder ein Gemisch der Komponenten A und C auf eine Temperatur von 20 bis 60°C gebracht wird, wobei jeweils die fehlende Komponente B oder C nach Erreichen der Temperatur von 20 bis 60°C zugegeben wird, und anschließend die Temperatur des Reaktionsgemischs für einen Zeitraum von 1 bis 30 min auf einen Wert von 61 bis 300°C gebracht wird.

**2.** Verfahren nach Anspruch 1, dadurch gekennzeichnet, daß als Komponente A Dimethylphosphonat oder Diethylphosphonat oder deren Gemisch eingesetzt wird.

**3.** Verfahren nach Anspruch 1 oder 2, dadurch gekennzeichnet, daß als Komponente B Formaldehyd, Paraformaldehyd, Acetaldehyd, Propionaldehyd, Butyraldehyd, Benzaldehyd oder Furfural oder ein Gemisch aus zwei oder mehr davon, eingesetzt wird.

**4.** Verfahren nach einem der vorstehenden Ansprüche, dadurch gekennzeichnet, daß als Komponente C Triethylamin oder N,N-Dimethylcyclohexylamin oder deren Gemisch eingesetzt wird.

**5.** Verfahren nach einem der vorstehenden Ansprüche, dadurch gekennzeichnet, daß die Komponente C in einer Menge von 0,1 bis 5 Gew.-% im Reaktionsgemisch enthalten ist.

**6.** Verfahren nach einem der vorstehenden Ansprüche, dadurch gekennzeichnet, daß die Umsetzung bei vermindertem Druck, insbesondere bei einem Druck von 0,01 bis 100 mbar, durchgeführt wird.

**7.** Polyurethan, dadurch gekennzeichnet, daß ein Dialkylhydroxyalkanphosphonat der allgemeinen Formel I enthalten ist.

**8.** Polyurethan nach Anspruch 7, dadurch gekennzeichnet, daß eine Verbindung oder ein Gemisch aus zwei oder mehr Verbindungen ausgewählt aus der Gruppe bestehend aus Dimethyl-1-hydroxymethanphosphonat, Dimethyl-1-hydroxyethanphosphonat, Dimethyl-1-hydroxypropanphosphonat, Dimethyl-1-hydroxybutanphosphonat, Diethyl-1-hydroxymethanphosphonat und Diethyl-1-hydroxyethanphosphonat, enthalten ist.

**9.** Polyurethan nach Anspruch 7 oder 8, dadurch gekennzeichnet, daß die Gesamtheit aller zur Herstellung des Polyurethans eingesetzten Verbindungen mit gegenüber Isocyanaten reaktiven Wasserstoffatomen einen Vernetzungsindex $I_V$ von mindestens 3 aufweist.

**10.** Polyurethan, erhältlich durch Umsetzung von mindestens drei Komponenten D, E und F, wobei

d) als Komponente D ein organisches Polyisocyanat und
e) als Komponente E eine höhermolekulare Verbindung mit mindestens zwei gegenüber Isocyanaten reaktiven, Wasserstoffatome tragenden funktionellen Gruppen sowie
f) als Komponente F ein ein Dialkylhydroxyalkanposphonat der allgemeinen Formel I

eingesetzt wird.

**11.** Polyurethan nach Anspruch 10, dadurch gekennzeichnet, daß als Komponente E zur Herstellung des erfindungsgemäßen Polyurethans ein Polyetheralkohol oder ein Gemisch aus Polyetheralkoholen eingesetzt wird, die mit Sorbit oder Saccharose oder deren Gemisch gestartet wurden.

**12.** Polyurethan nach Anspruch 10 oder 11, dadurch gekennzeichnet, daß bei der Umsetzung im Reaktionsgemisch mindestens eine Verbindung ausgewählt aus der Gruppe bestehend aus

g) Kettenverlängerungsmitteln oder Vernetzungsmitteln oder deren Gemische, und
h) Treibmitteln und
i) Katalysatoren und
j) Hilfsmitteln oder Zusatzstoffen oder deren Gemische,

oder ein Gemisch aus zwei oder mehr davon, vorliegt.

**13.** Polyurethan nach einem der Ansprüche 10 bis 12, dadurch gekennzeichnet, daß bei der Umsetzung zusätzlich noch mindestens ein festes oder ein flüssiges Flammschutzmittel oder ein Gemisch aus zwei oder mehr davon vorliegt.

**14.** Verfahren zur Herstellung von Polyurethanen durch Umsetzung von mindestens drei Komponenten D, E und F, wobei

d) als Komponente D ein organisches Polyisocyanat und
e) als Komponente E eine höhermolekularen Verbindung mit mindestens zwei gegenüber Isocyanaten reaktiven, Wasserstoffatome tragenden funktionellen Gruppen sowie
f) als Komponente F ein Dialkylhydroxyalkanphosphonat der allgemeinen Formel I

eingesetzt wird.

**15.** Verwendung mindestens eines Polyurethans gemäß einem der Ansprüche 7 bis 13 oder hergestellt gemäß Anspruch 14, als Dämmstoff, Polstermaterial, flexibles Dichtungsmaterial oder als Integralschaum.

**16.** Verwendung mindestens eines Dialkylhydroxyalkanphosphonats der allgemeinen Formel I als Flammschutzmittel in Polyurethanen.

Europäisches Patentamt

# EUROPÄISCHER RECHERCHENBERICHT

Nummer der Anmeldung
EP 98 11 9030

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,X | US 4 808 744 A (THOMAS A. HARDY) 28. Februar 1989 * Spalte 4, Zeile 66 - Spalte 5, Zeile 27; Beispiel 1 * | 1-6 | C07F9/40 C08G18/38 |
| X | * Spalte 9, Zeile 32-36 * --- | 7-16 | |
| X | US 2 579 810 A (ELLIS K. FIELDS) 25. Dezember 1951 * Beispiele 1,2 * --- | 1-6 | |
| X | US 3 385 801 A (GAIL H. BIRUM) 28. Mai 1968 * das ganze Dokument * ----- | 7-16 | |

RECHERCHIERTE SACHGEBIETE (Int.Cl.6)
C07F
C08G

Der vorliegende Recherchenbericht wurde für alle Patentansprüche erstellt

| Recherchenort | Abschlußdatum der Recherche | Prüfer |
|---|---|---|
| DEN HAAG | 12. Januar 1999 | Beslier, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 98 11 9030

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-01-1999

| Im Recherchenbericht angeführtes Patentdokument | Datum der Veröffentlichung | Mitglied(er) der Patentfamilie | Datum der Veröffentlichung |
|---|---|---|---|
| US 4808744 A | 28-02-1989 | US 4883891 A | 28-11-1989 |
| | | US 4883892 A | 28-11-1989 |
| | | US 5097057 A | 17-03-1992 |
| US 2579810 A | 25-12-1951 | KEINE | |
| US 3385801 A | 28-05-1968 | KEINE | |

EPO FORM P0461

Für nähere Einzelheiten zu diesem Anhang : siehe Amtsblatt des Europäischen Patentamts, Nr.12/82